(19) Europäisches Patentamt / European Patent Office / Office européen des brevets

(11) **EP 4 567 287 B1**

(12) **EUROPÄISCHE PATENTSCHRIFT**

(45) Veröffentlichungstag und Bekanntmachung des Hinweises auf die Patenterteilung:
**15.10.2025  Patentblatt 2025/42**

(21) Anmeldenummer: **23214673.8**

(22) Anmeldetag: **06.12.2023**

(51) Internationale Patentklassifikation (IPC):
***F16B 19/10*** *(2006.01)*

(52) Gemeinsame Patentklassifikation (CPC):
**F16B 19/10**

(54) **BEFESTIGUNGSHÜLSE UND BAUTEIL DAMIT SOWIE EIN FÜGE- UND EIN HERSTELLUNGSVERFAHREN DER BEFESTIGUNGSHÜLSE**

FASTENING SLEEVE AND COMPONENT HAVING SAME, AND A JOINING AND A PRODUCTION METHOD FOR THE FASTENING SLEEVE

MANCHON DE FIXATION ET COMPOSANT LE COMPRENANT, AINSI QUE PROCÉDÉ D'ASSEMBLAGE ET DE FABRICATION DU MANCHON DE FIXATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**11.06.2025  Patentblatt 2025/24**

(73) Patentinhaber: **Böllhoff Verbindungstechnik GmbH**
**33649 Bielefeld (DE)**

(72) Erfinder:
• **UFFELMANN, Marcel**
 **33415 Verl (DE)**
• **WISIOREK, Norman**
 **33739 Bielefeld (DE)**

(74) Vertreter: **HWP Intellectual Property**
 **Ridlerstraße 35**
 **80339 München (DE)**

(56) Entgegenhaltungen:
**EP-A1- 3 073 131    US-A1- 2007 110 541**

**Beschreibung**

1. Gebiet der Erfindung

Die vorliegende Erfindung betrifft eine nicht-selbststanzende Befestigungshülse für ein vorgelochtes Kunststoffbauteil, ein Kunststoffbauteil damit sowie ein Fügeverfahren der Befestigungshülse in der vorgelochten Bauteilöffnung des Kunststoffbauteils. Zudem betrifft vorliegende Erfindung ein Herstellungsverfahren der Befestigungshülse.

2. Hintergrund der Erfindung

Im Stand der Technik sind verschiedene Befestigungshülsen bekannt, die in Bauteilöffnungen vorgelochter Bauteile befestigt werden. Somit sind diese Befestigungshülsen derart konstruiert, dass sie nicht stanzend in Bauteilöffnungen beispielsweise als Öffnungsverstärkung eingebracht werden.

US 2007/0110541 A1 beschreibt eine Befestigungshülse mit einem hohlzylindrischen Schaft, der an seinem ersten axialen Ende einen radial vorstehenden umlaufenden Radialkragen aufweist. Die Länge des hohlzylindrischen Schafts ist derart ausgelegt, dass das zweite axiale Ende des Schafts über eine Bauteildicke hinausragt, sodass das zweite axiale Ende des hohlzylindrischen Schafts radial aufgeweitet werden kann. Bevor die radiale Aufweitung und damit die Befestigung der Befestigungshülse innerhalb der Bauteilöffnung erfolgt, wird eine Lochscheibe auf das zweite axiale Ende des hohlzylindrischen Schafts aufgesetzt und innerhalb dieser Scheibe das zweite axiale Ende des hohlzylindrischen Schafts axial aufgeweitet. Auf diese Weise ergibt sich ein Halt des Bauteils zwischen dem Radialkragen am ersten axialen Ende des hohlzylindrischen Schafts und der mit dem aufgeweiteten zweiten axialen Ende des hohlzylindrischen Schafts befestigten Scheibe. Der Nachteil dieser Anordnung besteht darin, dass neben der aufwändigen Kombination aus Befestigungshülse und zusätzlicher Scheibe lediglich eine klemmende Befestigung der Befestigungshülse innerhalb der Bauteilöffnung erreicht wird. Die Konstruktion der Befestigungshülse erlaubt jedoch nicht, eine flüssigkeitsdichte Verbindung zwischen der Befestigungshülse und dem Bauteil zu realisieren.

EP 0 080 697 A1 beschreibt ebenfalls eine Befestigungshülse, die mit Hilfe einer zusätzlichen Haltescheibe an einer Bauteilöffnung befestigt wird. Auch diese Befestigungshülse erfordert eine vorhandene Bauteilöffnung im Bauteil, um daran befestigt zu werden. Damit sich die Befestigungshülse am Bauteil drehfest verklemmt, sind dornartige Vorsprünge an einer Anlagefläche des umfänglich umlaufenden Radialkragens vorgesehen, die sich im Bauteil verankern. Derartige dornartige Vorsprünge blockieren zwar ein Mitdrehen der Befestigungshülse gegen ein wirkendes Drehmoment, schwächen aber gleichzeitig das Bauteil und verhindern eine flüssigkeitsdichte Anlage des Radialkragens an der Bauteiloberfläche. Am zweiten axialen Ende des hohlzylindrischen Schafts wird eine Scheibe aufgesetzt, die ebenfalls axial vorstehende verankernde Vorsprünge aufweist. Diese Vorsprünge sind in Richtung des Bauteils bzw. des Radialkragens am ersten axialen Ende des hohlzylindrischen Schafts der Befestigungshülse gerichtet. Diese axialen Vorsprünge dienen ebenfalls der Verankerung und haben die gleiche Funktion wie die oben beschriebenen axialen Vorsprünge am umlaufenden Radialkragen.

WO 2016/013405 A1 beschreibt eine Befestigungshülse mit einem ovalen Querschnitt. Diese Befestigungshülse wird zunächst aus einer zylindrisch geformten Befestigungshülse geformt, indem die zylindrische Hülse auf einen Dorn ovalen Querschnitts getrieben wird. Die Befestigung der ovalen Befestigungshülse in einer vorhandenen Bauteilöffnung erfolgt durch ein axiales auf sich selbst Falten der umlaufenden Wand des ovalen Schafts. Auf diese Weise bildet sich gegenüberliegend zum umlaufenden Radialkragen am ersten axialen Ende ein kragenähnlicher radialer Vorsprung am zweiten axialen Ende des ovalen Schafts aufgrund des auf sich selbst gefalteten zweiten axialen Endes des Schafts aus. Der Radialkragen am ersten axialen Ende sowie der auf sich selbst gefaltete radialvorstehende Befestigungsflansch am zweiten axialen Ende des ovalen Schafts werden jeweils in einer Bauteilvertiefung aufgenommen, wobei diese Anordnung keine flüssigkeitsdichte Verbindung zwischen der Befestigungshülse und dem Bauteil sicherstellen kann.

US 2013/0298723 A1 beschreibt eine Befestigungshülse mit einem hohlzylindrischen Schaft runden Querschnitts. An einem ersten axialen Ende des hohlzylindrischen Schafts ist ein umlaufender nach außen vorstehender Radialkragen angeordnet. Dieser stützt sich an einer Bauteiloberfläche ab, sobald der Schaft der Befestigungshülse in einer vorhandenen Bauteilöffnung angeordnet worden ist. An einem zweiten axialen Ende des Schafts der Befestigungshülse ist die Wand des hohlzylindrischen Schafts radial auswärts verjüngt, um ein axiales Stauchen des Schafts zur Befestigung der Befestigungshülse innerhalb der Bauteilöffnung zu vereinfachen. Durch die Stauchung am zweiten axialen Ende des Befestigungsschafts entsteht eine radial auswärts gerichtete Stauchwulst, sodass das Bauteil zwischen der Stauchwulst am zweiten axialen Ende und dem Radialkragen am ersten axialen Ende des Schafts gehalten wird. Zwar ist die Verbindung aus Bauteil und Befestigungshülse einfach herstellbar, jedoch nehmen der Radialkragen am ersten axialen Ende des Schafts und die Stauchwulst am zweiten axialen Ende des Schafts viel Platz ein, sodass eine raumsparende Befestigung des Bauteils mithilfe der Befestigungshülse verhindert ist.

EP 2 811 179 A1 beschreibt eine Befestigungshülse mit einem umlaufenden Radialkragen an einem ersten axialen Ende eines hohlzylindrischen Schafts, welche in einer vorhandenen Bauteilöffnung eines Kompositbauteils angeordnet werden soll. Diese Befestigungshülse dient somit der Verstärkung der Durchzugsöffnung in dem Kompositbauteil. Zu diesem Zweck hat die Befestigungshülse eine relativ große axiale Länge, sodass eine mehrfache axiale Stauchung entlang der Mittellängsachse des hohlzylindrischen Schafts eine Befestigung der Befestigungshülse in der Bauteilöffnung des Kompositbauteils realisiert. Diese große axiale Länge des hohlzylindrischen Schafts erlaubt zunächst eine Faltung der Schaftwand auf sich selbst am zweiten axialen Ende, also am vom Radialkragen abgewandten Ende des hohlzylindrischen Schafts. Mit dieser Faltung auf sich selbst ist die Befestigungshülse noch nicht ausreichend in der Bauteilöffnung befestigt. Vielmehr ist es erforderlich, dass zusätzlich zu dieser Faltung und der Ausbildung eines Faltungskragens am zweiten axialen Ende ein Stauchen des verbliebenen hohlzylindrischen Schafts in axialer Richtung erfolgen muss. Die Stauchung führt dazu, dass der hohlzylindrische Schaft innerhalb des Kompositbauteils radial aufgeweitet wird und der radial vorstehende Faltungskragen am zweiten axialen Ende des hohlzylindrischen Schafts bis auf die benachbarte Bauteiloberfläche gepresst wird. Diese Art der Befestigung der Befestigungshülse ist nur möglich, da sich das Kompositbauteil in seinem Inneren aufgrund der Materialwahl, wie beispielsweise Kunstschaum, radial Aufweiten lässt, um einen Teil der Schaftwand aufgrund der Stauchung in sich aufnehmen zu können. Dieses Befestigungsprinzip der vorliegenden Befestigungshülse funktioniert entsprechend nicht in härteren Bauteilen, wie beispielsweise Metall oder unverformbaren Kunststoffbauteilen, da sich der hohlzylindrische Schaft nicht in Kombination mit einer Aufweitung radial auswärts innerhalb der Bauteilöffnung stauchen lässt.

EP 3 115 124 A1 beschreibt eine Befestigungshülse, die aus einer Lochplatte geformt wird. Zu diesem Zweck wird ein rotierender Dorn in die vorgefertigte Öffnung der Lochplatte gedrückt, der mithilfe der Reibungswärme die Lochplatte in eine Befestigungshülse und durch ein Bauteil verformt. Auf diese Weise bildet sich eine Befestigungshülse mit einem umlaufenden Radialkragen an einem ersten axialen Ende des hohlzylindrischen Schafts aus. Zur Befestigung der Befestigungshülse innerhalb der erzeugten Bauteilöffnung wird eine Lochscheibe auf das zweite axiale Ende des hohlzylindrischen Schafts aufgesetzt und das zweite axiale Ende des hohlzylindrischen Schafts radial aufgeweitet. Zwar handelt es sich um eine nicht selbststanzende Befestigungshülse, jedoch wird diese nicht in eine vorhandene Bauteilöffnung des Bauteils eingesetzt und dort befestigt. Vielmehr wird die Bauteilöffnung gemeinsam mit dem hohlzylindrischen Schaft der Befestigungshülse erzeugt. Zwar zeichnet sich diese Anordnung durch eine Passgenauigkeit von Bauteilöffnung und Befestigungshülse aus, jedoch sorgt diese Passgenauigkeit nicht für eine flüssigkeitsdichte Verbindung zwischen Befestigungshülse und Bauteil.

JP 06048447 A beschreibt eine Befestigungshülse mit einem umlaufenden Radialkragen an einem ersten axialen Ende eines hohlzylindrischen Schafts. Der hohlzylindrische Schaft weist an seiner radialen Außenseite eine abdichtende Gummischicht auf, die der Abdichtung zwischen der Befestigungshülse und dem Bauteil innerhalb der Bauteilöffnung dient. Gemäß einer anderen Alternative ist eine derartige Gummischicht abdichtend an einer Anlageseite des Radialschafts angeordnet, die dem hohlzylindrischen Schaft zugewandt ist. Der Nachteil dieser Konstruktion besteht darin, dass die Befestigungshülse aufwendig aus verschiedenen Materialien produziert werden muss. Zudem ist es erforderlich, dass beispielsweise bei der Anordnung der abdichtenden Gummischicht an der radialen Außenseite des hohlzylindrischen Schafts eine ausreichende Pressung zwischen einer radialen Innenwand des Bauteils und der Außenseite des hohlzylindrischen Schafts erfolgt. Somit ist nicht nur die Herstellung der Befestigungshülse aufwendig, sondern die Anordnung der Befestigungshülse erfordert ebenfalls eine maßgenaue Anfertigung der Bauteilöffnung.

Ein gestauchter Bund und eine gestauchte Mutter, die sich in eine feste achsensymmetrische Form wölben, wenn ein dünnwandiger Abschnitt am Spitzenende gekrümmt und an einem Teil aus Harz befestigt wird, sind in EP 3 073 131 A1 beschrieben. Der gestauchte Bund ist ausgestattet mit einer Hülse mit einem dickwandigen Abschnitt, der dick ist, einem dünnwandigen Abschnitt, der dünn ist, und einem Stufenabschnitt zwischen dem dickwandigen Abschnitt und dem dünnwandigen Abschnitt. Zudem ist ein Flansch vorgesehen, der auf der Seite des dickwandigen Abschnitts der Hülse geformt ist und einen größeren Durchmesser als die Hülse hat. Es wird ein Durchgangsloch gebildet, das die Hülse und den Flansch durchdringt. Die Hülse wird in ein Befestigungsloch einer Harzkomponente eingesetzt und dann wird der dünnwandige Teil gestaucht, um einen gestauchten Teil zu bilden, wodurch die Harzkomponente zwischen dem Flansch und dem gestauchten Teil eingeklemmt und befestigt wird. Wenn der Außendurchmesser des dünnwandigen Abschnitts D, die Wandstärke t, die Länge L und die Poisson-Zahl $\gamma$ ist, gelten die folgenden Gleichungen:

$$r = \frac{D-t}{2}, \quad m = \frac{L}{\pi^4 \sqrt{\frac{r^2 t^2 20}{12(1-\gamma^2)}}}$$ und 1,2 < $m$ < 1,8.

Im Hinblick auf die Nachteile im Stand der Technik ist es daher die Aufgabe vorliegender Erfindung, eine Befestigungshülse vorzuschlagen, die mit einem vorgelochten Bauteil eine flüssigkeitsdichte Verbindung bereitstellt.

3. Zusammenfassung der Erfindung

Die obige Aufgabe wird gelöst durch eine nicht-selbsststanzende metallische Befestigungshülse gemäß Patentanspruch 1, ein vorgelochtes Kunststoffbauteil mit dieser Befestigungshülse gemäß Patentanspruch 8, ein Fügeverfahren der Befestigungshülse gemäß Patentanspruch 9 sowie durch ein Kaltschlagverfahren zur Herstellung der Befestigungshülse gemäß Patentanspruch 12. Vorteilhafte Ausführungsformen und Weiterentwicklungen der Erfindung ergeben sich aus der nachfolgenden Beschreibung, den Zeichnungen sowie den anhängenden Patentansprüchen.

Vorliegende Erfindung offenbart eine nicht-selbststanzende metallische Befestigungshülse, die angepasst ist, um in einem nicht-metallischen Bauteil eine Öffnungsverstärkung zu bilden, und die folgenden Merkmale aufweist: einen hohlzylindrischen und im Querschnitt runden Schaft mit einem ersten und einem zweiten axialen Ende, einen am ersten axialen Ende angeordneten und geschlossen um den Schaft umlaufenden und in radialer Richtung von dem Schaft vorstehenden Radialkragen, der an einer schaftzugewandten Anlagefläche eine integral ausgebildete vorstehende Dichtstruktur aufweist, einen am zweiten axialen Ende des Schafts angeordneten radial auswärts verjüngten axialen Wandabschnitt einer umfänglich umlaufenden Wand des Schafts, der zur Bildung eines axialen Hinterschnitts radial auswärts aufweitbar ist.

Vorliegende Erfindung liefert eine Befestigungshülse, die in nicht metallischen Bauteilen eine vorhandene Bauteilöffnung in ihrem Inneren ausgekleidet, verstärkt, für Befestigungsanwendungen stabilisiert und zudem bevorzugt eine flüssigkeitsdichte Verbindung zwischen der Befestigungshülse und dem Bauteil selbst herstellt. Dies stellt eine konstruktive Grundlage dar, um kraftintensive Befestigungen innerhalb der Befestigungshülse anzuordnen und an dem so verstärkten Bauteil zu befestigen. Des Weiteren wird die Grundlage mit dieser Befestigungshülse dafür geschaffen, dass auch verlässlich mechanische Verbindungen in flüssigkeitsempfindlichen Zonen mithilfe der abdichtenden Befestigungshülse bereitgestellt werden können. Denn die Befestigungshülse schafft einen flüssigkeitsdichten Verbund mit dem Bauteil durch seine Anordnung in der Bauteilöffnung und ein Einprägen der Dichtstruktur in die Bauteiloberfläche angrenzend an die Bauteilöffnung, sodass beispielsweise in Kombination mit einem ebenfalls abdichtenden Befestigungsmittel, welches die Befestigungshülse durchgreift, bestimmte Bereiche flüssigkeitsdicht abgeschirmt werden können.

Somit werden mit einer einfach herzustellenden Konstruktion dieser Befestigungshülse eine mechanisch belastbare Verbindungsfunktion als auch eine flüssigkeitssensitive Abdichtungsfunktion realisiert.

Erfindungsgemäß bevorzugt weist die Befestigungshülse eine axiale Gesamtlänge L auf, wobei für eine axiale Abschnittslänge l des verjüngten axialen Wandabschnitts gilt: $0,2\ L \leq l \leq 0,6\ L$, vorzugsweise $0,3\ L \leq l \leq 0,5\ L$.

Die erfindungsgemäß bevorzugte Befestigungshülse wird derart in der Bauteilöffnung befestigt, dass das zweite axiale Ende des Schafts abgewandt vom umlaufenden Radialkragen radial auswärts aufgeweitet wird. Diese mechanische Umformung des zweiten axialen Endes des Schafts faltet gerade nicht die Schaftwand auf sich selbst in axialer Richtung zum Radialkragen. Zudem wird auch die Wand des Schafts nicht in axialer Richtung gestaucht, um die Befestigungshülse in der Bauteilöffnung zu befestigen. Vielmehr wird das zweite axiale Ende des hohlzylindrischen Schafts radial derart aufgeweitet, dass diese radiale Aufweitung einen axialen Hinterschnitt bildet. Auf diese Weise wird das Bauteil zwischen der Anlagefläche des umfänglich umlaufenden Radialkragens am ersten axialen Ende des Schafts und den durch radiale Aufweitung erzeugten axialen Hinterschnitt gehalten und vorzugsweise geklemmt.

Neben dem Halten der Befestigungshülse innerhalb der Bauteilöffnung, in dem sich Radialkragen und axialer Hinterschnitt jeweils am Bauteil abstützen, erzeugt bevorzugt das radiale Aufweiten des zweiten axialen Endes des hohlzylindrischen Schafts ein Ziehen des Radialkragens über den Schaft in Richtung des zweiten axialen Endes. Dies führt gemäß einer ersten Alternative dazu, dass vorzugsweise die schaftzugewandte Anlagefläche des Radialkragens so stark gegen die angrenzende Bauteiloberfläche gedrückt wird, dass sich vorzugsweise die integrale Dichtstruktur in die Bauteiloberfläche eindrückt bzw. einprägt. Auf diese Weise bilden bevorzugt die integrale Dichtstruktur und die dadurch in der Bauteiloberfläche erzeugte Verformung eine Labyrinthdichtung, die insgesamt für die Flüssigkeitsabdichtung zwischen Bauteil und Befestigungshülse sorgt.

Um das radiale Aufweiten des zweiten axialen Endes des hohlzylindrischen Schafts zu erleichtern, ist ein Teil der umlaufenden Wand des Schafts angrenzend an das zweite axiale Ende mit einer geringeren Stärke ausgebildet als die Schaftwand angrenzend an den umlaufenden Radialkragen. Vorzugsweise ist am zweiten axialen Ende die Schaftwand radial auswärts verjüngt, sodass sich angrenzend an das zweite axiale Ende im Inneren des hohlzylindrischen Schafts eine größere Öffnung bildet als im hohlzylindrischen Schaft angrenzend an den Radialkragen. Die auf diese Weise dünner ausgebildete Schaftwand am zweiten axialen Ende lässt sich leichter radial auswärts aufweiten, um den verbindenden bzw. befestigenden axialen Hinterschnitt zu bilden. Zudem kann die größere innere Öffnung des hohlzylindrischen Schafts am zweiten axialen Ende als Einführhilfe für einen aufweitenden Stempel oder eine entsprechende Matrize genutzt werden. Vorzugsweise erstreckt sich dieser radial auswärts verjüngte Wandabschnitt über weniger als die Hälfte der axialen Länge des hohlzylindrischen Schafts, um die Befestigungshülse ausreichend axial stabil zu halten.

Erfindungsgemäß weist der Schaft eine umfänglich umlaufende geschlossene Schaftwand mit einer ersten Wandstärke S benachbart zum Kragen und einer zweiten Wandstärke s im verjüngten Wandabschnitt auf, für die gilt $8/20\ S \leq s \leq 12/20\ S$, vorzugsweise $9/20\ S \leq s \leq 11/20\ S$.

Befestigungsversuche bzw. Setzversuche der Befestigungshülse in einer Bauteilöffnung haben gezeigt, dass die Wandstärke im verjüngten Schaftbereich annähernd halb so groß sein sollte wie die Wandstärke benachbart zum umlaufenden Radialkragen. Auf diese Weise werden kombiniert zwei Funktionen realisiert. Einerseits ist die Schaftwand am zweiten axialen Ende des hohlzylindrischen Schafts dünn genug, um in einen axialen Hinterschnitt verformt zu werden. Des Weiteren ist die Schaftwand aber weiterhin stabil genug, um für eine verlässliche Verbindung durch die Befestigungshülse zu sorgen.

Weiter bevorzugt liegt die erste Wandstärke S im Bereich von 1,8 mm ≤ S ≤ 2,3 mm und die zweite Wandstärke s im Bereich von 0,8 mm ≤ s ≤ 1,2 mm.

Die Befestigungshülse wird bevorzugt mit einer Länge im Bereich von 6-10 mm, vorzugsweise 6-8 mm oder 6-7 mm bereitgestellt. Für diesen Längenbereich hat es sich ebenfalls als vorteilhaft erwiesen, wenn die Wandstärken im hohlzylindrischen Schaft benachbart zum umlaufenden Radialkragen und im verjüngten Bereich des hohlzylindrischen Schafts in den oben angegebenen Wandstärkebereichen liegen. Die bevorzugte Länge der Befestigungshülse in Kombination mit den Wandstärkebereichen geben eine ausgewogene Mischung für eine stabile Befestigungshülse, die neben einer verlässlichen Verbindung auch eine flüssigkeitsdichte Kombination von Befestigungshülse und Bauteil realisiert.

Gemäß einer weiteren bevorzugten Ausführungsform vorliegender Erfindung ist die schaftzugewandte Anlagefläche des umlaufenden Radialkragens senkrecht zu einer Mittellängsachse des hohlzylindrischen Schafts orientiert und die integral ausgebildete Dichtstruktur mindestens eine konzentrisch um den Schaft verlaufende Ringstruktur, die aus der schaftzugewandten Anlagefläche vorsteht.

Wie oben bereits diskutiert worden ist, weist die schaftzugewandte Anlagefläche des umlaufenden Radialkragens eine integral ausgebildete vorstehende Dichtstruktur auf. Diese Dichtstruktur ist bevorzugt ringförmig ausgebildet, also eine Ringstruktur, die um den gesamten hohlzylindrischen Schaft geschlossen umläuft. Durch diesen geschlossenen Umlauf wird sichergestellt, dass aus allen beliebigen Radialrichtungen angreifende Flüssigkeiten durch die integrale Dichtstruktur aufgehalten werden können.

Die integral ausgebildete Dichtstruktur steht aus der schaftzugewandten Anlagefläche des Radialkragens vor. Während des Setzvorgangs der Befestigungshülse in die Bauteilöffnung wird diese vorstehende Dichtstruktur in die Bauteiloberfläche eingeprägt bzw. eingedrückt. Damit greift bevorzugt die vorstehende Dichtstruktur in komplementär dazu ausgeformte Vertiefungen der Bauteiloberfläche ein, sodass sich vorzugsweise eine Labyrinthdichtung an der Grenzfläche zwischen schaftzugewandter Anlagefläche und Bauteiloberfläche ausbildet. Aufgrund der befestigenden radialen Aufweitung des zweiten axialen Endes des hohlzylindrischen Schafts wird die schaftzugewandte Anlagefläche mit der integral ausgebildeten Dichtstruktur permanent gegen die Bauteiloberfläche gezogen. Dies stellt sicher, dass die ausgebildete Abdichtung an einer Grenzfläche zwischen schaftzugewandter Anlagefläche und Bauteiloberfläche ihre abdichtende Funktion nicht verliert.

Die ringartig ausgebildete Dichtstruktur kann in ihrer Form unterschiedlich ausgebildet sein. Die wesentliche Bedeutung besteht darin, dass die abdichtende Ringstruktur aus der Anlagefläche vorsteht, um sich in die Bauteiloberfläche einprägen zu können. In diesem Zusammenhang ist es bevorzugt, dass die Ringstruktur in ihrem radialen Querschnitt einen Kreisbogen, eine eckige Gestalt, eine wellige Gestalt oder Ähnliches aufweist. Zudem ist es bevorzugt, dass mehrere Ringstrukturen mit unterschiedlich großem Durchmesser an der schaftzugewandten Anlagefläche angeordnet sein können.

Nach einer weiteren bevorzugten Ausführungsform vorliegender Erfindung steht der Dichtring um eine Höhe H von der Anlagefläche vor, für die gilt: 0,1 mm ≤ H ≤ 1 mm, insbesondere 0,1 mm ≤ H ≤ 0,5 mm.

Vorzugsweise steht die integral ausgebildete Dichtstruktur um die Höhe H aus der schaftzugewandten Anlagefläche vor. Der oben angegebene Höhenbereich H stellt sicher, dass die integral ausgebildete Dichtstruktur ausreichend groß ist, um eine flüssigkeitsdichte Verbindung zum Bauteil herstellen zu können. Zudem stellt der bevorzugte Höhenbereich ebenfalls sicher, dass die integral ausgebildete Dichtstruktur nicht zu groß ist, dass sie nicht mehr vollständig in die Oberfläche des Kunststoffbauteils eingeprägt bzw. eingedrückt werden kann. Vorzugsweise wird die integral ausgebildete Dichtstruktur der schaftzugewandten Anlagefläche so weit in die Bauteiloberfläche eingedrückt, dass die Bauteiloberfläche die Dichtstruktur vollständig aufnimmt und die übrige schaftzugewandte Anlagefläche an der Bauteiloberfläche anliegt.

Vorzugsweise hat die vorstehende Ringstruktur einen bogenförmigen Querschnitt.

Im Vergleich verschieden geformter Dichtstrukturen hat sich gezeigt, dass eine bessere Abdichtung mit abgerundeten Dichtstrukturen im Vergleich zu eckigen Dichtstrukturen erzielt werden kann. Denn die bevorzugten abgerundeten Dichtstrukturen, beispielsweise ein halbkreisförmiger Querschnitt der integral ausgebildeten ringförmigen Dichtstruktur, erlaubt ein gleichmäßiges Materialfließen des Bauteilmaterials während des Einprägens der Dichtstruktur in die Bauteiloberfläche. Bei einer weniger bevorzugten eckigen Dichtstruktur ist nicht immer der optimale Kontakt zwischen Bauteiloberfläche und Dichtstruktur gewährleistet, der jedoch nicht die Flüssigkeitsabdichtung behindert. Zudem lässt sich bevorzugt eine Dichtstruktur mit abgerundetem Querschnitt einfacher im Kaltschlagverfahren herstellen als eine Dichtstruktur mit eckigem Querschnitt.

Weiter bevorzugt besteht die Befestigungshülse aus einem C4C-Stahl mit einer Zink-Nickel-Beschichtung.

Vorliegende Erfindung offenbart zudem ein vorgelochtes Kunststoffbauteil mit mindestens einer Bauteilöffnung, in der eine Befestigungshülse gemäß mindestens einer der obigen Ausgestaltungen befestigt ist.

Des Weiteren umfasst vorliegende Erfindung ein Fügeverfahren einer nicht-selbststanzenden Befestigungshülse gemäß einer der obigen Ausgestaltungen in einer Bauteilöffnung eines vorgelochten Kunststoffbauteils, welches die folgenden Schritte aufweist: Bereitstellen des vorgelochten Kunststoffbauteils, Einsetzen der Befestigungshülse in die vorgelochte Bauteilöffnung derart, dass eine schaftzugewandte Anlagefläche eines umlaufenden Radialkragens der Befestigungshülse an dem Kunststoffbauteil anliegt, und radiales Aufweiten eines Endes eines Schafts der Befestigungshülse, der in der Bauteilöffnung angeordnet ist, sodass das Bauteil zwischen der schaftzugewandten Anlagefläche und einem aufgeweiteten axialen Schaftbereichs gehalten wird.

Gemäß einer bevorzugten Ausführungsform des Fügeverfahrens wird der aufgeweitete axiale Schaftbereich um das 0,01-0,06fache eines Schaftaußendurchmessers des nicht aufgeweiteten Schafts der Befestigungshülse aufgeweitet.

Zudem wird vorzugsweise das Fügeverfahren um den folgenden Schritt ergänzt: Einpressen einer Dichtstruktur der schaftzugewandten Anlagefläche in eine Oberfläche des Kunststoffbauteils und Erzeugen einer flüssigkeitsdichten Verbindung zwischen Kunststoffbauteil und Befestigungshülse.

Zudem umfasst vorliegende Erfindung ein Kaltschlagverfahren einer nicht-selbststanzenden metallischen Befestigungshülse gemäß mindestens einer der obigen Ausgestaltungen, welches die folgenden Schritte aufweist: Bereitstellen eines Drahtrohlings, Fließpressen des Drahtrohlings zu einer Hülse mit einem hohlzylindrischen Schaft und einem geschlossen um den Schaft umlaufenden und in radialer Richtung vom Schaft vorstehenden Radialkragen, der an einer schaftzugewandten Anlagefläche eine integrale Dichtstruktur aufweist.

Vorzugsweise umfasst das Kaltschlagverfahren den weiteren Schritt: Erzeugen eines radial auswärts verjüngten Wandabschnitts einer umfänglich umlaufenden Wand des Schafts an einem vom Radialkragen abgewandten axialen Ende des Schafts.

4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:

Figur 1   eine Seitenansicht einer bevorzugten Ausführungsform der erfindungsgemäßen Befestigungshülse,

Figur 2   eine seitliche Schnittansicht der bevorzugten Ausführungsform der Befestigungshülse aus Figur 1,

Figur 3   eine vergrößerte Darstellung des eingekreisten Bereichs aus Figur 2, die eine bevorzugte Ausführungsform einer integral ausgebildeten Dichtstruktur an einer Anlagefläche eines Radialkragens der Befestigungshülse zeigt,

Figur 4   eine weitere bevorzugte Ausführungsform der integral ausgebildeten Dichtstruktur an der Anlagefläche des Radialkragens,

Figur 5   eine perspektivische Schnittdarstellung einer bevorzugten Ausführungsform der Befestigungshülse, die in einer Bauteilöffnung eines Bauteils gesetzt bzw. befestigt ist,

Figur 6   eine seitliche Darstellung einer bevorzugten Ausführungsform der erfindungsgemäßen Befestigungshülse im gesetzten Zustand ohne Bauteil,

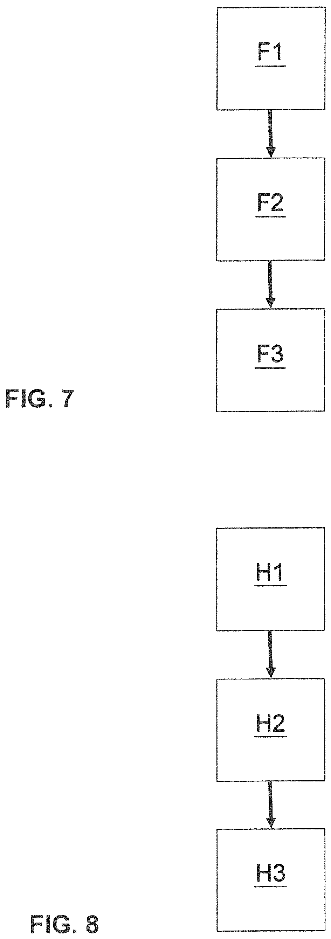

Figur 7   ein Flussdiagramm einer bevorzugten Ausführungsform eines Fügeverfahrens der Befestigungshülse in einer Bauteilöffnung und

Figur 8   ein Flussdiagramm einer bevorzugten Ausführungsform eines Herstellungsverfahrens der erfindungsgemäßen Befestigungshülse.

5. Detaillierte Beschreibung der bevorzugten Ausführungsformen

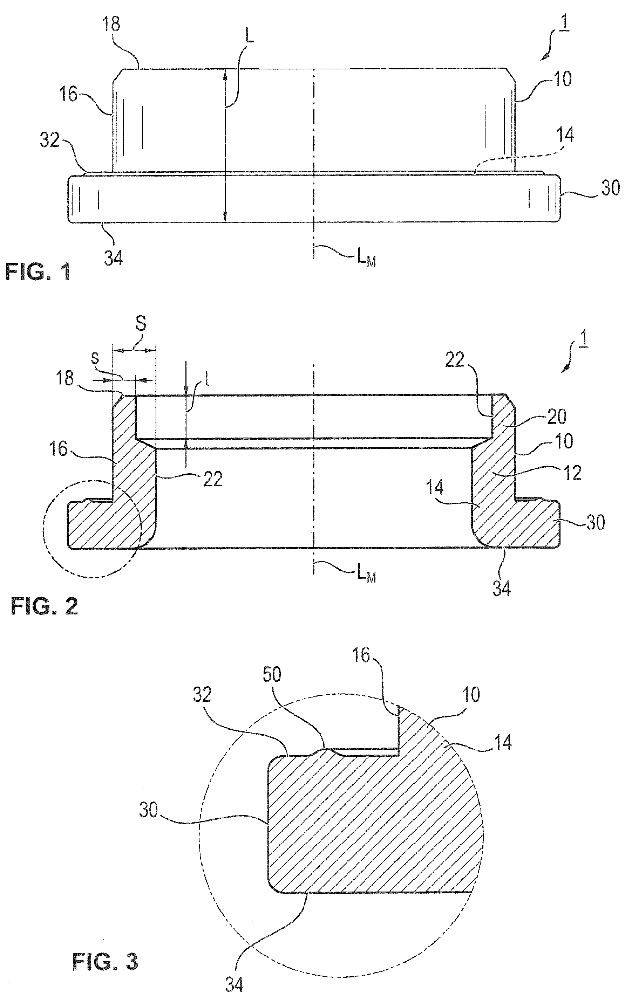

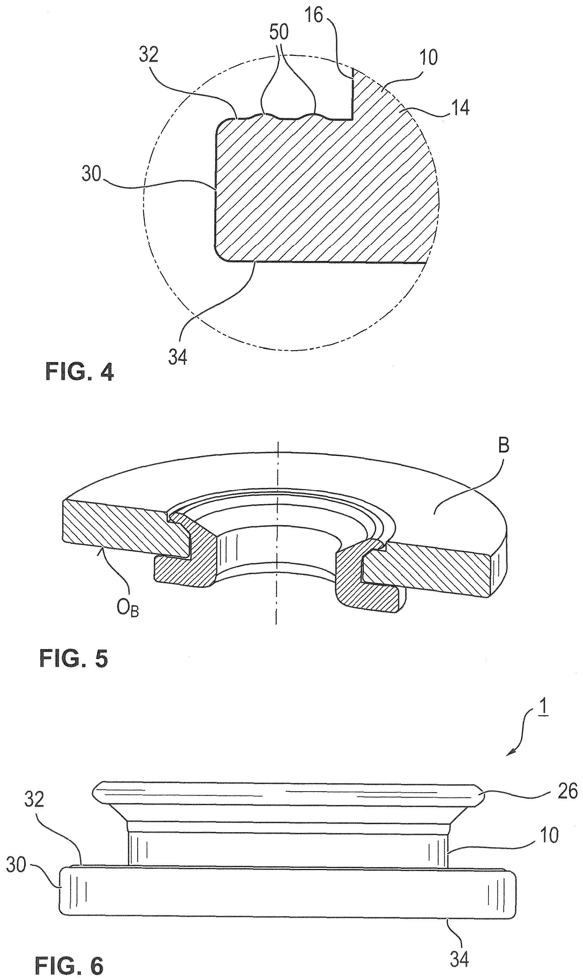

Eine bevorzugte Ausführungsform der erfindungsgemäßen Befestigungshülse 1 ist in verschiedenen Darstellungen in den Figuren 1, 2, 5 und 6 gezeigt. Während die Darstellungen der Figuren 1 und 2 die Befestigungshülse 1 im ungesetzten Zustand zeigen, ist die Befestigungshülse in den Figuren 5 und 6 im gesetzten Zustand mit und ohne Bauteil B dargestellt.

Die Befestigungshülse 1 ist vorzugsweise mit einem Kaltschlagverfahren aus Metall hergestellt. Sie dient dazu, in einer vorhandenen Bauteilöffnung O des Bauteils B gesetzt zu werden, um diese zu verstärken. Gemäß einer bevorzugten Ausführungsform vorliegender Erfindung besteht das Bauteil B mit der vorgefertigten Bauteilöffnung O aus Kunststoff oder allgemein aus einem weicheren Material als der Werkstoff der Befestigungshülse 1.

Da in der Praxis Kunststoffe, beispielsweise in Form von Abdeckungen, Verkleidungen oder anderen konstruktiven Bauteilen, Anwendung finden, bildet die in der Bauteilöffnung O gesetzte Befestigungshülse 1 eine Verstärkung der Bauteilöffnung O. Verstärkung bedeutet in diesem Zusammenhang, dass die Befestigungshülse 1 die Bauteilöffnung O stabilisierend ausgekleidet, da sie parallel zur radialen Innenwand der Bauteilöffnung verläuft. Zudem bildet die Befestigungshülse 1 auch eine axiale Stütze für eine durch die Bauteilöffnung O verlaufende Verschraubung oder anderweitige Befestigung. Im speziellen nimmt die Befestigungshülse 1 axiale Druckspannungen, beispielsweise durch eine angreifende Verschraubung, auf, ohne diese in das angrenzende Kunststoffbauteil einzuleiten. Damit wird durch die Befestigungshülse 1 eine verlässliche Befestigung im/am Kunststoffbauteil unterstützt und gleichzeitig ein nachteiliges Fließen des Kunststoffs angrenzend an die Bauteilöffnung O vermieden.

Aus Stabilitäts- und Verarbeitungsgründen besteht die Befestigungshülse 1 vorzugsweise aus C4C-Stahl, einem Stahl zum Kaltschlagen bzw. Kaltstauchen und Kaltfließpressen.

Erfindungsgemäß bevorzugt ist die Befestigungshülse 1 aus C4C-Stahl mit einer Zink-Nickel-Beschichtung versehen. Die bevorzugte Zink-Nickel-Beschichtung bietet einen kathodischen Korrosionsschutz durch den Zink-Anteil, der als Opferanode fungiert. Zudem erhöht die Zink-Nickel-Beschichtung die thermische Belastbarkeit der Befestigungshülse 1 im Vergleich zum unbeschichteten Zustand der Befestigungshülse 1.

Die Befestigungshülse 1 weist einen hohlzylindrischen Schaft 10 mit einem bevorzugt runden Querschnitt auf. Der hohlzylindrische Schaft 10 wird durch eine geschlossen um eine Mitlängsachse $L_m$ umlaufende Wand 12 gebildet.

An einem ersten axialen Ende 14 des Schafts 10 ist ein geschlossen um den Schaft 10 umlaufender Radialkragen 30 angeordnet. Der Radialkragen 30 ist integral mit dem Schaft 10 ausgebildet und steht in radialer Richtung auswärts von diesem vor. Entsprechend ragt der Radialkragen 30 über eine radiale Außenseite 16 des Schafts 10 hinaus.

Der Radialkragen 30 hat eine Anlagefläche 32, die dem Schaft 10 zugewandt ist. Diese ist bevorzugt senkrecht zur Mittellängsachse $L_m$ ausgerichtet und bildet eine Kontaktfläche mit dem Bauteil B, nachdem die Befestigungshülse 1 in die Bauteilöffnung O gefügt worden ist (siehe Figur 5).

Auf der schaftzugewandten Anlagefläche 32 ist eine Dichtstruktur 50 integral ausgebildet. Sie ragt bzw. steht aus der Anlagefläche 32 in Richtung Schaft 10 vor, wie unten näher erläutert ist.

An einem zweiten axialen Ende 18 des Schafts 10, welches dem Radialkragen 30 axial gegenüber liegt, ist die umlaufende Wand 12 des Schafts 10 in ihrer Stärke senkrecht zur Längsachse $L_m$ verjüngt ausgebildet. Die verjüngte Wand am zweiten axialen Ende 18 erstreckt sich über einen axialen Abschnitt, hier der verjüngte axiale Wandabschnitt 20. Um die Wandstärke im verjüngten axialen Wandabschnitt 20 zu reduzieren, springt eine radiale Innenseite 22 des Schafts 10 über den axialen Wandabschnitt 20 radial auswärts, sodass sich der radial auswärts verjüngte axiale Wandabschnitt 20 ergibt.

Der verjüngte Wandabschnitt 20 weist aufgrund seiner geringeren Wandstärke im Vergleich zur übrigen Wand 12 des Schafts 10 eine erleichterte plastische Verformbarkeit auf. Dies unterstützt das Fügeverfahren bzw. das Setzen und Befestigen der Befestigungshülse 1 in der Bauteilöffnung O. Zu diesem Zweck wird der Schaft 10 an seinem zweiten axialen Ende 18, also im axial verjüngten Wandabschnitt 20, radial auswärts aufgeweitet, wie man anhand von Figuren 5 und 6 erkennen kann. Im Vergleich zu einer radialen Innenwand der Bauteilöffnung O bildet sich damit ein axialer Hinterschnitt 26 aus, sodass das Bauteil B zwischen der Anlagefläche 32 des Radialkragens 30 und dem als axialer Hinterschnitt 26 verformten zweiten axialen Ende 18 des Schafts 10 gehalten, bevorzugt geklemmt wird.

Die Befestigungshülse 1 hat eine Gesamtlänge L, wie sie in Figur 1 dargestellt ist. Die Gesamtlänge L erstreckt sich von der schaftabgewandten Seite 34 des Radialkragens 30 bis zum Ende des Schafts 10. Der verjüngte axiale Wandabschnitt 20 hat eine axiale Länge l.

Es hat sich als vorteilhaft erwiesen, wenn die Gesamtlänge L der Befestigungshülse 1 und die Länge l des verjüngten Wandabschnitts 20 in folgendem Verhältnis zueinanderstehen:

$$0{,}2 \, L \leq l \leq 0{,}6 \, L, \text{ vorzugsweise } 0{,}3 \, L \leq l \leq 0{,}5 \, L.$$

Die umlaufende Wand 12 des Schafts 10 hat eine Stärke S. Der verjüngte axiale Wandabschnitt 20 angrenzend an das zweite axiale Ende 18 des Schafts 10 weist eine Stärke s auf. Die Stärke s des verjüngten Wandabschnitts 20 und die Stärke S der umlaufenden Wand 12 erfüllen folgende Verhältnisgleichung

$$8/20 \, S \leq s \leq 12/20 \, S, \text{ vorzugsweise } 9/20 \, S \leq s \leq 11/20 \, S.$$

Die Verhältnisgleichung der Wandstärken S, s unterstreicht das ausgewogene Verhältnis zwischen einer radial auswärts verformbaren Wand 20 mit der Stärke s und einer Stärke S der Wand 12 des Schafts 10. Das Verhältnis der Wandstärken S, s gewährleistet eine belastbare axiale Stabilität der Befestigungshülse 1 aufgrund der Wand 12 des Schafts 10. Gleichzeitig lässt sich die Befestigungshülse 1 mit geringem Aufwand verlässlich in der Bauteilöffnung O befestigen, indem der verjüngte Wandabschnitt 20 über seine Wandstärke s eine effizient handhabbare Verformbarkeit gewährleistet.

In bevorzugten Absolutwerten liegt die Wandstärke S der Wand 12 des Schafts 10 im Bereich von 1,8 mm ≤ S ≤ 2,3 mm und die Wandstärke s des verjüngten Wandabschnitts 20 im Bereich von 0,8 mm ≤ s ≤ 1,2 mm.

Weiter bevorzugt hat eine Befestigungshülse 1 mit der Gesamtlänge L im Bereich von 5,5 mm ≤ L ≤ 8 mm, vorzugsweise 6 mm ≤ L ≤ 7,5 mm und insbesondere 6,5 mm ≤ L ≤ 7,0 mm eine vorteilhafte Gesamtlänge L. Diese Gesamtlänge L gewährleistet bevorzugt, dass während des Setzens der Befestigungshülse 1 der Schaft 10 der Befestigungshülse 1 gerade nicht durch Stauchung verformt oder beschädigt wird. Zudem gewährleistet diese Länge L eine verlässliche Befestigung der Befestigungshülse 1 in der Bauteilöffnung O.

Die Dichtstruktur 50 umfasst gemäß den bevorzugten Ausführungsformen der Figuren 3 und 4 einen oder zwei konzentrisch um die Längsachse L angeordnete Ringe 50. Erfindungsgemäß bevorzugt stehen der/die Ringe 50 um die Höhe H aus der Anlagefläche 32 des Radialkragens 30 vor. Vorzugsweise liegt die Höhe H im Bereich von 0,1 mm ≤ H ≤ 1 mm, insbesondere 0,1 mm ≤ H ≤ 0,5 mm oder 0,1 mm ≤ H ≤ 0,2 mm.

Gemäß einer weiteren bevorzugten Ausführungsform vorliegender Erfindung ist die integrale Dichtstruktur 50 im Radialschnitt (siehe Figuren 3 und 4) bogenförmig ausgebildet.

Ebenfalls bevorzugt hat die bogenförmige Dichtstruktur 50 einen Radius von 0,35±0,05 mm.

Gemäß einer weiteren bevorzugten Ausführungsform vorliegender Erfindung hat die Befestigungshülse 1 einen Innendurchmesser $D_I$ des Schafts 10 im Bereich von 8 mm ≤ $D_I$ ≤ 16 mm, vorzugsweise 9,5 mm ≤ $D_I$ ≤ 14,5 mm und insbesondere $D_I$ = 10 mm oder $D_I$ = 14 mm.

Weiter bevorzugt hat der Schaft 10 einen Außendurchmesser $D_a$ von 12 mm ≤ $D_a$ ≤ 20 mm, vorzugsweise 13 mm ≤ $D_a$ ≤ 19 mm und insbesondere ist $D_a$ = 14,3 mm oder $D_a$ = 18 mm.

Der Radialkragen 30 hat vorzugsweise einen Außendurchmesser $D_K$ im Bereich von 18 mm ≤ $D_K$ ≤ 24 mm, vorzugsweise 19 mm ≤ $D_K$ ≤ 23 mm und insbesondere $D_K$ = 19 mm oder $D_K$ = 22 mm.

Erfindungsgemäß bevorzugt hat die Befestigungshülse 1 einen Schaftinnendurchmesser von 14 mm, einen Schaftaußendurchmesser von 18 mm, einen Außendurchmesser des Radialkragen von 22 mm und nur einen umlaufenden Dichtring 50, wie es beispielgebend in Figur 3 dargestellt ist.

Gemäß einer weiteren bevorzugten Ausführungsform der erfindungsgemäßen Befestigungshülse 1 hat diese einen Schaftinnendurchmesser von 10 mm, einen Schaftaußendurchmesser von 14,3 mm, einen Außendurchmesser des Radialkragens von 19 mm sowie zwei umlaufende Dichtringe 50, wie es schematisch in Figur 4 gezeigt ist.

### 6. Bezugszeichenliste

| | |
|---|---|
| 1 | Befestigungshülse |
| 10 | Schaft |
| 12 | Wand des Schafts 10 |
| 14 | erstes axiales Ende des Schafts 10 |
| 16 | radiale Außenseite des Schafts 10 |
| 18 | zweites axiales Ende des Schafts 10 |
| 20 | verjüngter axialer Wandabschnitt des Schafts 10 |
| 22 | radial zurückspringende Innenseite des Schafts am zweiten axialen Ende |
| 30 | Radialkragen |
| 32 | schaftzugewandte Anlagefläche |
| 34 | schaftabgewandte Seite des Radialkragens |
| 50 | Dichtstruktur |
| B | Bauteil |
| $L_m$ | Mittellängsachse |
| L | Gesamtlänge der Befestigungshülse 1 |
| I | Länge des verjüngten Wandabschnitts 20 |
| S | Stärke der Wand 12 des Schafts 10 |
| s | Stärke des verjüngten Wandabschnitts 20 |
| $O_B$ | Oberfläche des Bauteils B zugewandt zur Dichtstruktur |
| $D_I$ | Innendurchmesser des Schafts |
| $D_a$ | Außendurchmesser des Schafts |
| $D_K$ | Außendurchmesser des Radialkragens |

**Patentansprüche**

1. Eine nicht-selbststanzende metallische Befestigungshülse (1), die angepasst ist, um in einem nicht-metallischen Bauteil eine Öffnungsverstärkung zu bilden, und die folgenden Merkmale aufweist:

   einen hohlzylindrischen und im Querschnitt runden Schaft (10) mit einem ersten (14) und einem zweiten axialen Ende (18),
   einen am ersten axialen Ende (14) angeordneten und geschlossen um den Schaft (10) umlaufenden und in radialer Richtung von dem Schaft (10) vorstehenden Radialkragen (30), der an einer schaftzugewandten Anlagefläche (32) eine integral ausgebildete vorstehende Dichtstruktur (50) aufweist,
   einen am zweiten axialen Ende (18) des Schafts (10) angeordneten radial auswärts verjüngten axialen Wandabschnitt (20) einer umfänglich umlaufenden Wand (12) des Schafts (10), der zur Bildung eines axialen Hinterschnitts radial auswärts aufweitbar ist, wobei
   der Schaft (10) eine umfänglich umlaufende geschlossene Schaftwand (12) mit einer ersten Wandstärke S benachbart zum Kragen (30) und einer zweiten Wandstärke s im verjüngten Wandabschnitt (20) aufweist, für die gilt:

$$8/20\ S \leq s \leq 12/20\ S,\ \text{vorzugsweise}\ 9/20\ S \leq s \leq 11/20\ S.$$

2. Die Befestigungshülse (1) gemäß Patentanspruch 1, die eine axiale Gesamtlänge L aufweist, wobei für eine axiale Abschnittslänge l des verjüngten axialen Wandabschnitts (20) gilt:

$$0,2\ L \leq l \leq 0,6\ L,\ \text{vorzugsweise}\ 0,3\ L \leq l \leq 0,5\ L.$$

3. Die Befestigungshülse (1) gemäß Patentanspruch 1 oder 2, in der die erste Wandstärke S im Bereich $1,8\,\text{mm} \leq S \leq 2,3$ mm und die zweite Wandstärke s im Bereich von $0,8\,\text{mm} \leq s \leq 1,2$ mm liegt.

4. Die Befestigungshülse (1) gemäß einem der vorhergehenden Patentansprüche, in der die schaftzugewandte Anlagefläche (32) des umlaufenden Radialkragens (30) senkrecht zu einer Mittellängsachse (Lm) des hohlzylindrischen Schafts (10) orientiert ist und die integral ausgebildete Dichtstruktur (50) mindestens eine konzentrisch um den Schaft verlaufende Ringstruktur ist, die aus der schaftzugewandten Anlagefläche (32) vorsteht.

5. Die Befestigungshülse (1) gemäß Patentanspruch 4, in der der Dichtring (50) um eine Höhe H von der Anlagefläche (32) vorsteht, für die gilt:

$$0,1\ \text{mm} \leq H \leq 1\ \text{mm},\ \text{insbesondere}\ 0,1\ \text{mm} \leq H \leq 0,5\ \text{mm}.$$

6. Die Befestigungshülse (1) gemäß Patentanspruch 4 oder 5, in der die vorstehende Ringstruktur (50) einen bogenförmigen Querschnitt aufweist.

7. Die Befestigungshülse (1) gemäß einem der vorhergehenden Patentansprüche, die aus einem C4C-Stahl mit einer Zink-Nickel-Beschichtung besteht.

8. Ein vorgelochtes Kunststoffbauteil (B) mit mindestens einer Bauteilöffnung (O), in der eine Befestigungshülse (1) gemäß mindestens einem der vorhergehenden Patentansprüche befestigt ist.

9. Ein Fügeverfahren einer nicht-selbststanzenden Befestigungshülse (1) gemäß einem der Patentansprüche 1 bis 7 in einer Bauteilöffnung (O) eines vorgelochten Kunststoffbauteils (B), welches die folgenden Schritte aufweist:

   a. Bereitstellen des vorgelochten Kunststoffbauteils(B) (Schritt F1),
   b. Einsetzen der Befestigungshülse (1) in die vorgelochte Bauteilöffnung (O) derart, dass eine schaftzugewandte Anlagefläche (32) eines umlaufenden Radialkragens (30) der Befestigungshülse (1) an dem Kunststoffbauteil (B) anliegt (Schritt F2), und
   c. radiales Aufweiten eines Endes (18) eines Schafts (10) der Befestigungshülse (1), der in der Bauteilöffnung (O) angeordnet ist, sodass das Bauteil (B) zwischen der schaftzugewandten Anlagefläche (32) und einem aufgeweiteten axialen Schaftbereich gehalten wird (Schritt F3).

**10.** Das Fügeverfahren gemäß Patentanspruch 9, wobei der aufgeweitete axiale Schaftbereich um das 0,01-0,06fache eines Schaftaußendurchmessers des nicht aufgeweiteten Schafts (10) der Befestigungshülse (1) aufgeweitet wird.

**11.** Das Fügeverfahren gemäß Patentanspruch 9 oder 10 mit dem weiteren Schritt:
Einpressen einer Dichtstruktur (50) der schaftzugewandten Anlagefläche (32) in eine Oberfläche des Kunststoffbauteils (B) und Erzeugen einer flüssigkeitsdichten Verbindung zwischen Kunststoffbauteil (B) und Befestigungshülse (1).

**12.** Ein Kaltschlagverfahren einer nicht-selbststanzenden metallischen Befestigungshülse (1) gemäß mindestens einem der Patentansprüche 1 bis 7, welches die folgenden Schritte aufweist:

a. Bereitstellen eines Drahtrohlings (Schritt H1),
b. Fließpressen des Drahtrohlings zu einer Hülse mit einem hohlzylindrischen Schaft (10) und einem geschlossen um den Schaft (10) umlaufenden und in radialer Richtung vom Schaft (10) vorstehenden Radialkragen (30), der an einer schaftzugewandten Anlagefläche (32) eine integrale Dichtstruktur (50) aufweist (Schritt H3).

**13.** Das Kaltschlagverfahren gemäß Patentanspruch 12 mit dem weiteren Schritt:
c. Erzeugen eines radial auswärts verjüngten Wandabschnitts (20) einer umfänglich umlaufenden Wand (12) des Schafts (10) an einem vom Radialkragen (30) abgewandten axialen Ende (18) des Schafts (10) (Schritt H2).

## Claims

**1.** A non-self-piercing metallic fastening sleeve (1) which is adapted to form an opening reinforcement in a non-metallic component, comprising the following features:

a hollow-cylindrical and in cross-section round shaft (10) with a first (14) and a second axial end (18),
a radial collar (30) arranged at the first axial end (14) and circumferentially enclosing the shaft (10) and protruding in radial direction from the shaft (10), having an integrally configured, protruding sealing structure (50) at an attachment face (32) that faces the shaft,
a tapered, axial wall section (20) of a circumferentially extending wall (12) of the shaft (10), wherein the wall section (20) is arranged radially outside at a second axial end (18) of the shaft (10) which is extendable radially to the outside so as to form an axial undercut, wherein
the shaft (10) comprises a circumferentially extending closed shaft wall (12) with a first wall thickness S adjacent to the collar (30) and a second wall thickness s in the tapered wall section (20) to which the following applies:

$$8/20\ S \leq s \leq 12/20\ S, \text{ preferably } 9/20\ S \leq s \leq 11/20\ S.$$

**2.** The fastening sleeve (1) according to claim 1, having an axial overall length L, the following applying to an axial sectional length 1 of the tapered axial wall section (20):

$$0.2\ L \leq 1 \leq 0.6\ L, \text{ preferably } 0.3\ L \leq 1 \leq 0.5\ L.$$

**3.** The fastening sleeve (1) according to claim 1 or 2 where the first wall thickness S lies in the range from $1.8\ mm \leq S \leq 2.3$ mm and the second wall thickness s lies in the range from $0.8\ mm \leq s \leq 1.2\ mm$.

**4.** The fastening sleeve (1) according to one of the preceding claims, in which the shaft-facing attachment face (32) of the circumferential radial collar (30) is oriented perpendicular to a central longitudinal axis (Lm) of the hollow-cylindrical shaft (10) and the integrally formed sealing structure (50) is a ring structure extending at least concentrically around the shaft and projecting from the shaft-facing attachment face (32).

**5.** The fastening sleeve (1) according to claim 4, in which the sealing ring (50) projects by a height H from the attachment face (32) to which the following applies:

$$0.1\ mm \leq H \leq 1\ mm, \text{ in particular } 0.1\ mm \leq H \leq 0.5\ mm.$$

6. The fastening sleeve (1) according to claim 4 or 5, in which the projecting ring structure (50) has an arc-shaped cross-section.

7. The fastening sleeve (1) according to one of the preceding claims, consisting of a C4C steel with a zinc-nickel coating.

8. A pre-punched plastic component (B) with at least one component opening (O) in which a fastening sleeve (1) according to at least one of the preceding claims is fastened.

9. A joining method of a non-self-piercing fastening sleeve (1) according to one of the claims 1 to 7 in a component opening (O) of a pre-punched plastic component (B), comprising the following steps:

   a. providing the pre-punched plastic component (B) (step F1),
   b. inserting the fastening sleeve (1) into the pre-punched component opening (O) so that a shaft-facing attachment face (32) of a circumferential radial collar (30) of the fastening sleeve (1) attaches the plastic component (B) (step F2), and
   c. radially expanding an end (18) of a shaft (10) of the fastening sleeve (1), wherein the shaft is arranged in the component opening (O) so that the component (B) is held between the shaft-facing attachment face (32) and an expanded axial shaft portion (step F3).

10. The joining method according to claim 9, wherein the expanded axial shaft portion is expanded by 0.01 - 0.06 times of a shaft outer diameter of the non-expanded shaft (10) of the fastening sleeve (1).

11. The joining method according to claim 9 or 10 with the further step:
    impressing a sealing structure (50) of the shaft-facing attachment face (32) into a surface of the plastic component (B) and generating a liquid-proof connection between plastic component (B) and fastening sleeve (1).

12. A cold forming method of a non-self-piercing metallic fastening sleeve (1) according to at least one of the claims 1 to 7 comprising the following steps:

    a. providing a wire blank (step H1),
    b. extruding the wire blank to form a sleeve with a hollow-cylindrical shaft (10) and a radial collar (30) extending in a closed manner around the shaft (10) and projecting in radial direction from the shaft (10), which on a shaft-facing attachment surface (32) comprises an integral sealing structure (50) (step H3).

13. The cold forming method according to claim 12 with the further step:
    c. generating a radially outwards tapering wall section (20) of a circumferentially extending wall (12) of the shaft (10) at an axial end (18) of the shaft (10), wherein the axial end (18) faces away from the radial collar (30) (step H2).

**Revendications**

1. Manchon de fixation métallique non auto-poinçonneur (1), lequel est adapté pour former un renforcement d'ouverture dans un composant non métallique, et présente les caractéristiques suivantes :

   un arbre (10) cylindrique creux à section transversale ronde, doté d'une première (14) et d'une deuxième extrémité axiale (18),
   un col radial (30) disposé à la première extrémité axiale (14) et entourant l'arbre (10) de façon fermée et faisant saillie à partir de l'arbre (10) dans la direction radiale, lequel présente une structure d'étanchéité saillante formée intégralement (50) sur une surface d'appui tournée vers l'arbre (32),
   une section de paroi axiale (20) effilée radialement vers l'extérieur, disposée au niveau de la deuxième extrémité axiale (18) de l'arbre (10), d'une paroi circonférentielle périphérique (12) de l'arbre (10), laquelle peut être élargie radialement vers l'extérieur pour former une contre-dépouille axiale, dans lequel
   l'arbre (10) présente une paroi d'arbre fermée circonférentielle périphérique (12) avec une première épaisseur de paroi S adjacente au col (30) et une deuxième épaisseur de paroi s dans la section de paroi effilée (20), auxquelles s'applique :

$$8/20 \, S \leq s \leq 12/20 \, S, \text{ de préférence } 9/20 \, S \leq s \leq 11/20 \, S.$$

2. Manchon de fixation (1) selon la revendication 1, lequel présente une longueur totale axiale L, dans lequel, pour une longueur de section axiale l de la section de paroi axiale effilée (20), s'applique :

$$0,2\,L \leq l \leq 0,6\,L, \text{ de préférence } 0,3\,L \leq l \leq 0,5\,L.$$

3. Manchon de fixation (1) selon la revendication 1 ou 2, dans lequel la première épaisseur de paroi S est comprise dans la plage de $1,8\,mm \leq S \leq 2,3\,mm$ et la deuxième épaisseur de paroi s est comprise dans la plage de $0,8\,mm \leq s \leq 1,2\,mm$.

4. Manchon de fixation (1) selon l'une des revendications précédentes, dans lequel la surface d'appui tournée vers l'arbre (32) du col radial périphérique (30) est orientée perpendiculairement à un axe longitudinal médian (Lm) de l'arbre cylindrique creux (10) et la structure d'étanchéité formée intégralement (50) est au moins une structure annulaire s'étendant concentriquement autour de l'arbre, laquelle fait saillie hors de la surface d'appui tournée vers l'arbre (32).

5. Manchon de fixation (1) selon la revendication 4, dans lequel la bague d'étanchéité (50) fait saillie sur une hauteur H à partir de la surface d'appui (32), à laquelle s'applique :

$$0,1\,mm \leq H \leq 1\,mm, \text{ en particulier } 0,1\,mm \leq H \leq 0,5\,mm.$$

6. Manchon de fixation (1) selon la revendication 4 ou 5, dans lequel la structure annulaire saillante (50) présente une section transversale arquée.

7. Manchon de fixation (1) selon l'une des revendications précédentes, lequel est constitué d'un acier C4C avec un revêtement de zinc-nickel.

8. Composant en plastique pré-perforé (B) doté d'au moins une ouverture de composant (O), dans laquelle est fixé un manchon de fixation (1) selon l'une au moins des revendications précédentes.

9. Procédé d'assemblage d'un manchon de fixation non auto-poinçonneur (1) selon l'une des revendications 1 à 7 dans une ouverture de composant (O) d'un composant en plastique pré-perforé (B), lequel présente les étapes suivantes :

   a. mise à disposition du composant en plastique pré-perforé (B) (étape F1),
   b. insertion du manchon de fixation (1) dans l'ouverture de composant pré-perforé (O), de telle façon qu'une surface d'appui tournée vers l'arbre (32) d'un col radial périphérique (30) du manchon de fixation (1) s'applique sur le composant en plastique (B) (étape F2), et
   c. élargissement radial d'une extrémité (18) d'un arbre (10) du manchon de fixation (1), lequel est disposé dans l'ouverture de composant (O), de telle façon que le composant (B) est maintenu entre la surface d'appui tournée vers l'arbre (32) et une région d'arbre axiale élargie (étape F3).

10. Procédé d'assemblage selon la revendication 9, dans lequel la région d'arbre axiale élargie est élargie de 0,01 à 0,06 fois un diamètre extérieur d'arbre de l'arbre non élargi (10) du manchon de fixation (1).

11. Procédé d'assemblage selon la revendication 9 ou 10, comprenant l'étape supplémentaire suivante : enfoncement d'une structure d'étanchéité (50) de la surface d'appui tournée vers l'arbre (32) dans une surface du composant en plastique (B) et fabrication d'une liaison étanche au liquide entre le composant en plastique (B) et le manchon de fixation (1).

12. Procédé de frappe à froid d'un manchon de fixation métallique non auto-poinçonneur (1) selon l'une au moins des revendications 1 7, présentant les étapes suivantes :

   a. mise à disposition d'une ébauche de fil (étape H1),
   b. filage de l'ébauche de fil en un manchon doté d'un arbre cylindrique creux (10) et un col radial (30) entourant l'arbre (10) de façon fermée et faisant saillie à partir de l'arbre (10) dans la direction radiale, lequel présente une structure d'étanchéité intégrale (50) sur une surface d'appui tournée vers l'arbre (32) (étape H3).

**13.** Procédé de frappe à froid selon la revendication 12, comprenant l'étape supplémentaire suivante :
c. fabrication d'une section de paroi effilée radialement vers l'extérieur (20) d'une paroi circonférentielle périphérique (12) de l'arbre (10) à une extrémité axiale (18) de l'arbre (10) opposée au col radial (30) (étape H2).

FIG. 1

FIG. 2

FIG. 3

FIG. 4

FIG. 5

FIG. 6

F1

F2

F3

FIG. 7

H1

H2

H3

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070110541 A1
- EP 0080697 A1
- WO 2016013405 A1
- US 20130298723 A1
- EP 2811179 A1
- EP 3115124 A1
- JP 06048447 A
- EP 3073131 A1